(19) 

**Europäisches Patentamt**
**European Patent Office**
**Office européen des brevets**

(11) **EP 2 374 278 B1**

(12) **FASCICULE DE BREVET EUROPEEN**

(45) Date de publication et mention
de la délivrance du brevet:
**30.05.2018 Bulletin 2018/22**

(21) Numéro de dépôt: **09805757.3**

(22) Date de dépôt: **18.12.2009**

(51) Int Cl.:
*H04N 19/139* *(2014.01)*        *H04N 19/176* *(2014.01)*
*H04N 19/172* *(2014.01)*        *H04N 19/107* *(2014.01)*
*H04N 19/527* *(2014.01)*        *H04N 19/523* *(2014.01)*
*H04N 19/517* *(2014.01)*        *H04N 19/577* *(2014.01)*

(86) Numéro de dépôt international:
**PCT/FR2009/052625**

(87) Numéro de publication internationale:
**WO 2010/070247 (24.06.2010 Gazette 2010/25)**

(54) **CODAGE VIDEO BASE SUR LA COMPENSATION DE MOUVEMENT GLOBAL**

VIDEOCODIERUNG BASIEREND AUF GLOBALER BEWEGUNGSKOMPENSATION

VIDEO CODING BASED ON GLOBAL MOVEMENT COMPENSATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0858834**
**19.12.2008 FR 0858833**

(43) Date de publication de la demande:
**12.10.2011 Bulletin 2011/41**

(73) Titulaire: **Thomson Licensing DTV**
**92130 Issy-les-Moulineaux (FR)**

(72) Inventeurs:
• **FRANCOIS, Edouard**
**F-92130 Issy-les-Moulineaux (FR)**
• **THOREAU, Dominique**
**F-92130 Issy-les-Moulineaux (FR)**
• **VIERON, Jérôme**
**F-92130 Issy-les-Moulineaux (FR)**
• **MARTIN, Aurélie**
**F-92130 Issy-les-Moulineaux (FR)**

(74) Mandataire: **Labelle, Lilian et al**
**TECHNICOLOR**
**1-5, rue Jeanne d'Arc**
**92130 Issy-les-Moulineaux (FR)**

• **ZHANG J ET AL: "Bidirectional variable size block motion compensation" ELECTRONICS LETTERS, vol. 34, no. 1, 8 janvier 1998 (1998-01-08), pages 52-53, XP006009109 IEE, Stevenage, GB ISSN: 0013-5194**
• **LYNCH W E ED: "Bidirectional motion estimation based on P frame motion vectors and area overlap" PROCEEDINGS OF THE 1992 INTERNATIONAL CONFERENCE ON ACOUSTIGS, SPEECH AND SIGNAL PROCESSING (ICASSP 1992), vol. 3, 23 mars 1992 (1992-03-23), pages 445-448, XP010058915 IEEE, US ISBN: 978-0-7803-0532-8**
• **HEISING G: "10. Zeitliche Zwischenbildinterpolation" EFFIZIENTE BEWEGTBILDCODIERUNG UNTER VERWENDUNG EINER GITTERBASIERTEN ZEITLICHEN PRÄDIKTION, 2002, pages 167-188, XP002533835 Mensch und Buch Verlag, Berlin, DE ISBN: 3-89820-425-5**
• **SUN ET AL: "Efficient motion estimation using motion predictor" PROCEEDINGS OF THE IASTED INTERNATIONAL CONFERENCE ON SIGNAL AND IMAGE PROCESSING (SIP 2003), 13 août 2003 (2003-08-13), pages 177-182, XP008051674 ACTA Press, Calgary, AB, CA ISBN: 0-88986-378-4**

(56) Documents cités:
**EP-A- 0 909 092        US-A1- 2003 043 912**
**US-B1- 6 205 178**

- STEINBACH E ET AL: "Using multiple global motion models for improved block-based video coding" PROCEEDINGS OF THE 1999 INTERNATIONAL CONFERENCE ON IMAGE PROCESSING (ICIP 1999), vol. 2, 24 octobre 1999 (1999-10-24), pages 56-60, XP010369069 IEEE, Piscataway, NJ, US ISBN: 978-0-7803-5467-8 cité dans la demande

**Description**

L'invention concerne un procédé d'estimation et de codage de paramètres de mouvement global d'une séquence d'images vidéo ainsi qu'un procédé et dispositif de codage d'images vidéo basé sur la compensation de mouvement global. Elle s'applique notamment aux domaines de la transmission, de l'analyse, du décodage et du transcodage de vidéos.

Une séquence vidéo comporte de par sa nature même une importante redondance statistique tant dans le domaine temporel que spatial. La volonté d'utiliser toujours plus efficacement la bande passante des médias de transmissions sur lesquels transitent ces séquences et les objectifs de réduction du coût de leur stockage ont posé très tôt la question de la compression vidéo. Les techniques classiques de compression vidéo peuvent généralement se diviser en deux étapes. La première vise à réduire la redondance spatiale et pour cela à compresser une image fixe. L'image est tout d'abord divisée en blocs de pixels (de 4x4 ou 8x8 selon, par exemple, les standards MPEG-1/2/4), un passage dans le domaine fréquentiel puis une quantification permettent d'approximer ou de supprimer les hautes fréquences auxquelles l'oeil est moins sensible, et enfin les données quantifiées sont codées entropiquement. La seconde a pour but de réduire la redondance temporelle. Cette technique permet de prédire une image, appelée image intermédiaire dans la suite de la description, à partir d'une ou plusieurs autre(s) image(s) de référence(s) précédemment décodée(s) au sein de la même séquence. En d'autres termes, une estimation de mouvement est effectuée. Cette technique consiste à chercher dans ces images de référence le bloc qui correspond le mieux à celui à prédire, et seul est conservé un vecteur estimation de mouvement correspondant au déplacement du bloc entre les deux images ainsi qu'une erreur résiduelle permettant de raffiner le rendu visuel.

Afin d'améliorer les performances de codage, notamment à bas et moyen débit, et donc obtenir pour des débits équivalents une meilleure qualité visuelle de la vidéo décodée, une technique appelée compensation du mouvement global désignée dans la suite de la description par l'acronyme GMC venant de l'expression anglo-saxonne « Global Motion Compensation » a été proposée. De nombreux modèles de mouvement globaux pour la compression vidéo existent dans l'état de l'art. Ce type de modèles a notamment été introduit dans le standard « MPEG-4 Visual », appelé également « MPEG-4 part 2 » ainsi que dans les standards DivX ou Dirac.

Dans les approches développées, pour une image donnée, le mouvement global entre ladite image et ses images de référence est estimé sur l'image entière ou par région. Les images de référence compensées par le mouvement global associé deviennent alors des candidates possibles pour la prédiction temporelle, au même titre que les images de références compensées par des mouvements non globaux, c'est-à-dire avec les méthodes classiques de codage. Les méthodes classiques de codage reposent habituellement sur l'utilisation d'un vecteur de mouvement par bloc ou de plusieurs vecteurs lorsque la prédiction temporelle est multidirectionnelle, c'est-à-dire qu'elle repose sur plusieurs images de référence. L'intérêt de l'usage du GMC est une réduction significative du coût de l'information de mouvement sur les zones de l'image où elle s'applique. La prédiction temporelle est également améliorée (un vecteur mouvement par pixel et non par bloc) par rapport à une représentation du mouvement basée sur un vecteur de translation par bloc.

Des schémas de codage vidéo utilisent maintenant des modèles GMC. L'article de Steinbach, Wiegand et Girod intitulé Using multiple global motion models for improved block-based video coding, ICIP 1999, vol.2, pp. 56-60, Oct. 1999, détaille ce type de modèle. Pour chaque image où ces modèles s'appliquent, une estimation et un codage des paramètres de mouvement globaux sont réalisés. Ceci est en particulier vrai dans les images bidirectionnelles, appelées également images de type B et images intermédiaires, où l'estimation et le codage sont effectués successivement dans les sens avant et arrière.

Cette approche présente plusieurs inconvénients. Comme l'estimation de l'ensemble des paramètres se fait dans un sens puis dans l'autre, la complexité calculatoire est importante. L'estimation consiste en général à identifier le mouvement global qui minimise l'erreur quadratique moyenne entre l'image courante (ou une région de cette image) et l'image de référence (ou une région de cette image) compensée en mouvement, et ce en procédant à une résolution aux moindres carrés. Cette estimation mène à un ensemble de paramètres, ou un vecteur, désigné par la lettre grecque $\theta$. Un estimation $\hat{\theta}$ du vecteurs de paramètres $\theta$ peut être obtenue à l'aide de l'expression suivante :

$$\hat{\theta} = \underset{\theta}{\arg\min}\left(\sum_{p \in R}\left(B[p] - I_{ref}\left[x - u_\theta(p), y - v_\theta(p)\right]\right)^2\right) \qquad (1)$$

dans laquelle p = (x,y) désigne la position d'un pixel dans l'image, R la région de traitement, B l'image courante à coder, $I_{ref}$ l'image de référence et $(u_\theta, v_\theta)$ les composantes du vecteur mouvement fonction du vecteur de paramètres globaux de mouvement $\theta$.

Dans le cas d'un modèle affine par exemple, $\theta$ représente un vecteur de 6 paramètres et il y a ainsi 2×6 paramètres à estimer par mouvement global, soit 6 pour le mouvement avant et 6 pour le mouvement arrière.

Habituellement, la fonction à minimiser est linéarisée par une approximation basée sur un développement de Taylor. Ceci peut être décrit par l'expression suivante :

$$\hat{\theta} = \arg\min_{\theta} \left( \sum_{p \in R} \left( B_t[p] + u_\theta(p).B_x[p] + v_\theta(p).B_y[p] \right)^2 \right) \qquad (2)$$

dans laquelle $B_t$, $B_x$ et $B_y$ désignent respectivement les gradients temporel, spatial horizontal et spatial vertical du signal B. La résolution aux moindres carrés revient alors à la résolution d'un système linéaire à N équations, N correspondant à la taille du modèle de mouvement global.

Une résolution itérative aux moindres carrés pondérés est habituellement appliquée afin de résoudre le problème des échantillons de l'image qui ne répondent pas au mouvement global, lesdits échantillons étant habituellement désignés par le terme anglo-saxon « outlier ». Une description de ce type d'estimateur, désignée par l'expression anglo-saxonne « M-estimator », peut être trouvée dans l'article de J. W. Tukey intitulé Explorary Data Analysis, 1977, Addison-Wesley, Reading, MA.

Un autre inconvénient est dû au fait que l'estimation est effectuée dans un sens puis dans l'autre. En conséquence, il peut y avoir des incohérences entre les paramètres de mouvement estimés avant et arrière. Ceci peut-être gênant en particulier dans une approche dans laquelle est choisi localement pour le codage de l'image intermédiaire soit l'indicateur avant soit l'indicateur arrière pour compenser en mouvement des textures rigides. C'est le cas notamment dans l'approche proposée dans l'article de Ndjiki-Nya, Hinz, Stüber et Wiegand intitulé A content-based video coding approach for rigid and non-rigid textures, ICIP'06, Atlanta, GA, USA, pp.3169-3172, Oct. 2006. Des incohérences de mouvement, même légères, peuvent avoir un effet visuel désagréable dû aux fluctuations temporelles du signal.

Un troisième inconvénient est une conséquence du fait que les paramètres de mouvement sont codés à la fois pour les sens avant et arrière. Si une structure en GOP de type B hiérarchiques, l'acronyme GOP venant de l'expression anglo-saxonne « Group of Picture », est employée, le coût de codage de ces paramètres peut devenir important. Ceci peut devenir un problème lorsqu'un bas, voire un très bas débit de transmission est ciblé pour une application donnée.

Pour ce qui concerne le codage d'images vidéo exploitant la compensation de mouvement global (GMC), dans un schéma conventionnel, même en cas de prédiction bi-directionnelle employant un mélange de prédiction avant et arrière, la compensation ne s'applique habituellement que dans un sens, avant et/ou arrière, ce qui peut générer des incohérences temporelles entre les versions compensées avant et arrière et dégrader le rendu visuel par des fluctuations temporelles sur les zones concernées. Par ailleurs, des images intermédiaires utilisant en référence des zones reconstruites à partir d'un mouvement global n'exploitent pas réellement cette information d'incohérence temporelle entre les prédictions avant et arrière. Un autre inconvénient des schémas de codage existant est que les zones exploitant un mouvement global doivent être signalées. Cela implique typiquement la nécessité de coder une information pour chaque bloc de l'image. De plus un résidu de codage est en général codé et si ce n'est pas le cas, il faut le signaler au décodeur. Il est en outre important de noter que le procédé de décodage basé sur la technique GMC est totalement déterminé et non adaptable à la complexité du terminal réalisant le décodage du flux vidéo. US6205178 B1, publié le 20-03-2010, décrit une méthode pour synthétiser une image prédite relative à une image originale d'une trame courante en utilisant une compensation de mouvement locale globale ou une compensation de mouvement globale. Un but de l'invention est notamment de pallier les inconvénients précités. A cet effet la présente description a pour objet un procédé d'estimation et de codage des paramètres de mouvement d'une séquence d'images vidéo composée de groupes d'images GOP, un GOP comportant au moins deux images de référence et au moins une image intermédiaire, le calcul du champ des vecteurs mouvement d'une image ou d'une partie d'image donnée par rapport à au moins une image ou une partie d'image de référence au sein d'un GOP étant basé sur le calcul de vecteurs de paramètres de mouvement globaux, les vecteurs de paramètres « arrière » décrivant les champs des vecteurs mouvement entre une image ou une partie d'image donnée et une image ou une partie d'image de référence déjà codée la précédant, le vecteur de paramètres « avant » décrivant le champ des vecteurs mouvement entre une image ou une partie d'image donnée et une image ou une partie d'image de référence déjà codée la suivant. Les vecteurs de paramètres « avant » et « arrière » associés aux images ou parties d'image intermédiaires sont exprimés en fonction du vecteur de paramètres décrivant les mouvements entre deux images ou parties d'image de référence.

Un vecteur de paramètres de mouvement global donné peut être composé d'un couple M, T, le premier terme du couple M correspondant à une matrice de dimension $2 \times 2$ et le second terme du couple T à une matrice $2 \times 1$.

Une estimation globale de mouvement est effectuée entre deux images ou parties d'image de référence d'un GOP donné de manière à estimer un vecteur de paramètres de mouvement global $\theta = (M,T)$ reliant les pixels des images ou parties d'image de référence selon l'expression $X_A = (I-M)X_C - T$ dans laquelle :

$X_A$ représente la position d'un pixel de la première image de référence de coordonnées $x_A$ et $y_A$ ; et

4

$X_C$ représente la position d'un pixel de la seconde image de référence (C) de coordonnées $x_C$ et $y_C$.

L'estimation des vecteurs de paramètres globaux de mouvement « arrière » $\theta_0=(M_0,T_0)$ et « avant » $\theta_1=(M_1,T_1)$ d'une image ou partie d'image intermédiaire d'un GOP donné par rapport à deux images ou parties d'image de référence dudit GOP est réalisée, par exemple, de manière à relier les pixels de l'image ou partie d'image intermédiaire aux pixels des images ou parties d'image de référence selon les expressions : $\begin{cases} X_A = (I-M_0)X_B - T_0 \\ X_C = (I-M_1)X_B - T_1 \end{cases}$ L'estimation des vecteurs de paramètres globaux de mouvement « arrière » $\theta_0=(M_0,T_0)$ et « avant » $\theta_1=(M_1,T_1)$ d'une image ou partie d'image intermédiaire est contrainte à deux degrés de liberté en déduisant $\theta_0$ et $\theta_1$ de deux paramètres $\alpha_0$ et $\alpha_1$ vérifiant les équations :

$$\begin{cases} M_0 = \alpha_0.M \\ T_0 = \alpha_0.T \end{cases} \quad \text{et} \quad \begin{cases} M_1 = \alpha_1.\left[I - (I-M)^{-1}\right] \\ T_1 = \alpha_1.\left[-(I-M)^{-1} \times T\right] \end{cases}$$

Une estimation $\hat{\alpha}_0$ du paramètre $\alpha_0$ peut être obtenue en utilisant l'expression :

$$\hat{\alpha}_0 = \frac{\sum_{p \in R} \left(B_{t,\theta_0}[p]S_\theta(p)\right)}{\sum_{p \in R} S_\theta^2(p)}$$

dans laquelle :

$S_\theta(p)=u_\theta(p).B_x[p]+v_\theta(p).B_y[p]$; et
$B_x[p]$ et $B_y[p]$ sont les gradients spatial horizontal et spatial vertical du signal de l'image intermédiaire ; et
$u_\theta$ et $v_\theta$ sont les composantes du vecteur mouvement en fonction du vecteur de paramètres globaux de mouvement $\theta$.

Par exemple, seul deux paramètres $\alpha_0$ et $\alpha_1$ sont codés pour représenter les vecteurs de paramètres globaux $\theta_0$ et $\theta_1$.

Selon un autre aspect l'estimation des paramètres globaux de mouvement « arrière » $\theta_0=(M_0,T_0)$ et « avant » $\theta_1=(M_1,T_1)$ d'une image intermédiaire est contrainte à un degré de liberté en déduisant $\theta_0$ et $\theta_1$ d'un paramètre $\alpha$ vérifiant les équations :

$$\begin{cases} M_0 = \alpha.M \\ T_0 = \alpha.T \end{cases} \quad \text{et} \quad \begin{cases} M_1 = (\alpha-1).(I-M)^{-1}M \\ T_1 = (\alpha-1).(I-M)^{-1}T \end{cases}$$

Une estimation $\hat{\alpha}$ du paramètre $\alpha$ est obtenue, par exemple, en utilisant l'expression :

$$\hat{\alpha} = \frac{\sum_{p \in R} \left(B_{t,\theta_0}[p]S_\theta(p) + B_{t,\theta_1}[p]S_{\theta''}(p) - S_{\theta''}^2(p)\right)}{\sum_{p \in R} \left(S_\theta^2(p) + S_{\theta''}^2(p)\right)}$$

dans laquelle :

$S_\theta(p) = u_\theta(p).B_x[p]+v_\theta(p).B_y[p]$; et
$S_{\theta''}(p) = u_{\theta''}(p).B_x[p]+v_{\theta''}(p).B_y[p]$; et
$\theta''$ correspond au couple de paramètres $((I-M)^{-1} \times M, (I-M)^{-1} \times T)$ ; et
$u''_\theta$ et $v''_\theta$ sont les composantes du vecteur mouvement en fonction du vecteur de paramètres globaux de mouvement $\theta''$.

Par exemple, seul un paramètre $\alpha$ est codé pour représenter les vecteurs de paramètres globaux $\theta_0$ et $\theta_1$. La description a aussi pour objet un dispositif de codage d'au moins une séquence vidéo, ladite séquence étant composée de groupes d'images GOP, un GOP comportant au moins deux images de référence et au moins une image intermédiaire. Le champ des vecteurs mouvement d'une image ou d'une partie d'image donnée par rapport à au moins une image ou une partie d'image de référence au sein d'un GOP est estimé en calculant des vecteurs de paramètres de mouvement globaux. Les vecteurs de paramètres « avant » et « arrière » associés aux images ou parties d'image intermédiaires sont codé en mettant en oeuvre le procédé de codage selon l'invention. La description a aussi pour objet un dispositif de décodage de séquences d'images vidéo composées de groupes d'images GOP, un GOP comportant au moins deux images de référence et au moins une image intermédiaire. Le champ des vecteurs mouvement d'une image ou d'une partie d'image donnée par rapport à au moins une image ou une partie d'image de référence au sein d'un GOP est reconstitué, les vecteurs de paramètres « avant » $\theta_1=(M_1,T_1)$ et « arrière » $\theta_0=(M_0,T_0)$ dudit champ associés aux images ou parties d'images intermédiaires étant déduits d'au moins un paramètre reliant ces vecteurs à au moins un vecteur de paramètres décrivant les mouvements entre deux images ou parties d'image de référence, ledit paramètre ayant été préalablement codé en utilisant le procédé de codage selon l'invention. La description a également pour objet un procédé de codage vidéo d'au moins une séquence d'images numériques, les images de ladite séquence pouvant être des images intermédiaires ou des images clés utilisées comme références pour le codage par compensation de mouvement des images intermédiaires. Les images intermédiaires sont codées par zone en se basant sur une compensation globale de mouvement GMC dans les sens avant et arrière à partir des images clés, les zones de l'image intermédiaire étant construites soit par fusion des zones des images clés compensées en mouvement global, soit par codage prédictif conventionnel, le choix entre fusion et codage prédictif conventionnel étant réalisé suivant le résultat d'une mesure de cohérence entre les signaux des zones des images clés compensées en mouvement global.

Par exemple, les images de référence sont codées avant les images intermédiaires et au moins une carte de segmentation associée auxdites images est calculée de manière à pouvoir distinguer les pixels de type GMC des autres pixels de ces images.

Les paramètres de mouvement global peuvent être estimés et codés avant le codage des images intermédiaires.

Selon un aspect de l'invention, des images clés compensées en mouvement sont déduites des images de clés en utilisant au moins les paramètres de mouvement global.

Des cartes de segmentation associées aux images clés compensées en mouvement peuvent être déduites des cartes de segmentation associées aux images clés par transpositions en utilisant au moins les paramètres d'estimation de mouvement.

L'image intermédiaire à coder ainsi que les images clés compensées en mouvement utilisées pour son codage sont, par exemple, découpées en zones de traitements, les zones de traitements de l'image intermédiaire à coder correspondant aux zones de traitement des images clés compensées en mouvement.

Selon un mode de réalisation les zones de traitement des images clés compensées en mouvement sont classées en fonction de leur proportion de pixels GMC, ladite proportion étant comparée à un seuil $\eta$ compris entre 0 et 1, une zone étant classée « GMC » lorsque ladite proportion est supérieure à $\eta$ et classée « non-GMC » dans le cas contraire.

Selon un autre mode de mise en oeuvre, la proportion de pixels GMC par zone des images clés compensées en mouvement est déduite des cartes de segmentation.

Si au moins une zone d'une des images compensées en mouvement et utilisées comme références pour le codage de la zone à coder d'une image intermédiaire est classée « non-GMC », un codage conventionnel de ladite zone peut être effectué.

Selon un autre aspect, si les zones des images compensées en mouvement utilisées comme références pour le codage d'une zone d'une image intermédiaire sont classées « GMC », la cohérence desdites zones est analysée par comparaison des signaux des zones des images clés compensées en mouvement global.

Les zones des images clés compensées en mouvement par la prise en compte des paramètres de compensation global dont la cohérence doit être analysée sont, par exemple, compensées en mouvement une seconde fois à l'aide d'un vecteur de translation d'une précision au pixel près.

Le vecteur de translation de la seconde compensation de mouvement peut être calculé à l'aide d'un estimateur de type « block matching ».

Selon un mode de réalisation, l'erreur quadratique moyenne D de la zone à coder est calculée et est comparée à un seuil prédéfini $\lambda$ de manière à distinguer les zones à faible gradient local des zones à fort gradient local, la zone étant considérée à faible gradient local et classée « cohérente » si D est inférieur à $\lambda$ et étant considérée à fort gradient local dans le cas contraire.

Une borne supérieur S de l'erreur quadratique moyenne D est calculée, par exemple, en utilisant les valeurs des gradients locaux de la zone courante et que l'erreur quadratique moyenne D est comparée à ladite borne S, la zone courante étant classée « cohérente » lorsque D est inférieur à cette borne et « non cohérente » dans le cas contraire.

Lorsque la zone à coder est classée « cohérente », la fusion des zones correspondantes des images clés compensées en mouvement peut être réalisée.

La fusion est réalisée, par exemple, en utilisant un algorithme de type « Graph cut ».

Selon un mode de réalisation, lorsque la zone en cours de traitement est classée « non cohérente », le codage conventionnel de ladite zone est réalisé. La description a aussi pour objet un dispositif de codage d'images vidéo d'au moins une séquence d'images numériques, les images de ladite séquence pouvant être des images intermédiaires ou des images clés utilisées comme références pour le codage par compensation de mouvement des images intermédiaires. Le dispositif de codage comporte des moyens pour coder les images intermédiaires par zone de traitement en se basant sur une compensation globale de mouvement GMC dans les sens avant et arrière à partir des images clés, les zones de traitement de l'image intermédiaire étant codées soit par fusion des zones correspondantes des images clés, soit par codage prédictif conventionnel et pour choisir automatiquement entre fusion et codage prédictif conventionnel par analyse de la zone à coder. La description a aussi pour objet un dispositif de décodage d'images vidéo d'au moins une séquence d'images numériques préalablement codée en utilisant le procédé de codage selon l'invention, les images de ladite séquence pouvant être des images intermédiaires ou des images clés utilisées comme références pour le décodage par compensation de mouvement des images intermédiaires. Les images intermédiaires sont décodées par zone en se basant sur une compensation globale de mouvement GMC dans les sens avant et arrière à partir des images clés décodées, les zones de l'image intermédiaire étant reconstruites soit par fusion des zones des images clés compensées en mouvement global, soit par décodage prédictif conventionnel, le choix entre fusion et décodage prédictif conventionnel étant réalisé suivant le résultat d'une mesure de cohérence entre les signaux des zones des images clés compensées en mouvement global. Ceci a notamment comme avantage d'améliorer les performances de codage, par réduction du débit requis tout en améliorant potentiellement la qualité visuelle de la séquence vidéo codée/décodée. Sur des séquences où seuls quelques objets d'avant plan bougent dans la scène, l'utilisation de ce procédé induit une réduction significative du débit du flux vidéo compressé par rapport aux techniques existantes. Par ailleurs, les artéfacts visuels dus à des fluctuations temporelles du signal sur ces zones sont limités par l'emploi de ce procédé. L'invention est définie par les revendications ci-jointes. D'autres caractéristiques et avantages de l'invention apparaîtront à l'aide de la description qui suit donnée à titre illustratif et non limitatif, faite en regard des dessins annexés parmi lesquels :

- la figure 1 illustre un exemple de GOP comprenant trois images intermédiaires s'appuyant sur deux images de référence ;
- la figure 2 illustre le cas d'une image intermédiaire dont le codage s'appuie sur deux images de référence, ce cas étant utilisé de manière à donner un exemple de mise en oeuvre du procédé selon l'invention.
- la figure 3 illustre le principe de dépendance temporelle entre images clés et images intermédiaires ;
- la figure 4 donne un exemple de mise en oeuvre du procédé de codage selon l'invention ;
- la figure 5 présente une méthode pour tester la cohérence d'une zone sur deux images différentes.

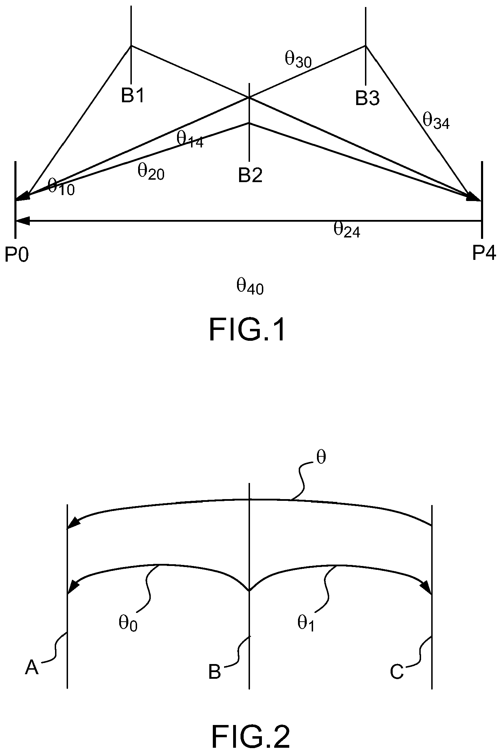

La figure 1 illustre un exemple de GOP comprenant trois images intermédiaires s'appuyant sur deux images de référence. En d'autre termes, cet exemple représente un GOP hiérarchique à 3 niveaux. Deux images P0 et P4 sont utilisées comme références pour coder les images intermédiaires B1, B2 et B3. Il y a alors 7 jeux de paramètres à coder par GOP, $\theta_{10}$ et $\theta_{14}$ pour l'image B1, $\theta_{20}$ et $\theta_{24}$ pour l'image B2, $\theta_{30}$ et $\theta_{34}$ pour l'image B3 et $\theta_{40}$ pour l'image P4. Dans cet exemple, une estimation de mouvement global est effectuée entre les images de référence P0 et P4, ladite estimation menant au jeu de paramètres $\theta_{40}$.

Dans le cadre de l'invention, il est proposé de restreindre le degré de liberté des paramètres de mouvement lors de l'estimation et du codage des différents jeux de paramètres de mouvement globaux. Cela peut être réalisé en s'appuyant sur le mouvement global entre les deux images de référence. Cette contrainte s'exprime à l'aide d'un ou deux paramètres, qui sont alors les seuls paramètres à estimer et à coder pour décrire à la fois les paramètres de mouvement avant et les paramètres de mouvement arrière.

L'invention propose notamment une méthode d'estimation de ces paramètres.

La figure 2 illustre le cas d'une image intermédiaire dont le codage s'appuie sur deux images de références, ce cas étant utilisé de manière à donner un exemple de mise en oeuvre du procédé selon l'invention.

L'image intermédiaire B se situe entre deux images de référence A et C, entre lesquelles une estimation « arrière » de mouvement global a été effectuée, et le vecteur des paramètres associés θ codé. Le modèle de mouvement utilisé est un modèle linéaire, appelé aussi modèle affine, s'exprimant par l'expression suivante :

$$X_A = (I - M)X_C - T \qquad (3)$$

dans laquelle $X_K = (x_K, y_K)$ représente la position d'un pixel de l'image K, K valant A, B ou C, I est la matrice identité de dimension 2x2, M est une matrice de dimension $2 \times 2$ et T une matrice de dimension $2 \times 1$ dont les éléments correspondent aux paramètres de mouvement global.

Par ailleurs, il est possible d'exprimer $X_A$ et $X_C$ en utilisant les expressions suivantes :

$$\begin{cases} X_A = (I - M_0)X_B - T_0 \\ X_C = (I - M_1)X_B - T_1 \end{cases} \qquad (4)$$

Connaissant $\theta = (M, T)$ qui a été préalablement estimé et codé, un but recherché est notamment d'identifier et de coder les paramètres de mouvements globaux « arrière » $\theta_0 = (M_0, T_0)$ et « avant » $\theta_1 = (M_1, T_1)$ tout en limitant leur coût de codage. Un autre objectif est d'assurer une cohérence entre $\theta_0$, $\theta_1$ et $\theta$ afin d'assurer une bonne cohérence temporelle de la compensation de mouvement sur l'image intermédiaire B.

Pour atteindre les objectifs précédemment cités, il est possible de mettre en oeuvre, par exemple, deux types de solutions, l'une à deux degrés de liberté et l'autre à un degré de liberté. Ces deux exemples sont explicités dans la suite de la description.

Un premier exemple de mise en oeuvre de l'invention, à deux degrés de liberté, a pour principe d'imposer des contraintes indépendantes sur les paramètres $\theta_0$ et $\theta_1$. Ces contraintes imposent aux couples $(M_0, T_0)$ et $(M_1, T_1)$ d'être proportionnels au couple $(M, T)$. Cela se traduit par les expressions suivantes :

$$\begin{cases} M_0 = \alpha_0.M \\ T_0 = \alpha_0.T \end{cases} \qquad \begin{cases} M_1 = \alpha_1.M' \\ T_1 = \alpha_1.T'' \end{cases} \qquad (5)$$

dans lesquelles $\theta' = (M',T')$ correspondant au mouvement global de A vers C. Il est alors aisé de démontrer à partir de l'équation (3) que $M' = I-(I-M)^{-1}$ et $T' = -(I-M)^{-1} \times T$. Dans ce cas, seuls les deux paramètres scalaires $\alpha_0$ et $\alpha_1$ doivent être estimés et codés pour caractériser les mouvements globaux avant et arrière.

Au niveau du codeur, l'estimation de mouvement de $\alpha_0$ revient alors à résoudre l'expression suivante, $\hat{\alpha}_0$ étant une estimation de $\alpha_0$ :

$$\hat{\alpha}_0 = \underset{\alpha}{\arg\min} \left( \sum_{p \in R} \left( B_{t,\theta_0}[p] + \alpha.u_\theta(p).B_x[p] + \alpha.v_\theta(p).B_y[p] \right)^2 \right) \qquad (6)$$

dans laquelle $B_{t,\theta_0}[p]$ est le gradient entre l'image courante et l'image précédente compensée par le mouvement global $\theta_0$ et basé sur la différence entre l'image courante et l'image de référence compensée en mouvement.

La résolution de cette équation conduit à l'expression :

$$\hat{\alpha}_0 = \frac{\sum_{p \in R} \left( B_{t,\theta_0}[p].S_\theta(p) \right)}{\sum_{p \in R} S_\theta^2(p)} \qquad (7)$$

dans laquelle $S_\theta(p) = u_\theta(p).B_x[p] + v_\theta(p).B_y[p]$.

Dans une résolution itérative de type moindre carrés pondérés, seul le gradient temporel $B_{t,\theta0}[p]$ dépend de $\alpha$. Les autres termes peuvent n'être calculés qu'à la première itération. L'estimation de mouvement est évidemment simplifiée par rapport à une estimation complète selon l'expression (2) puisqu'un seul paramètre est estimé au lieu de N, N étant la dimension du modèle de mouvement.

Pour l'estimation de $\alpha_1$, il suffit de remplacer dans l'expression (7) $\theta$ par $\theta'$ et $\theta_0$ par $\theta_1$.

Au niveau d'un codeur ou d'un décodeur, sachant que $\theta$ a été préalablement codé (ou décodé), il suffit donc de ne coder (ou décoder) que les paramètres $\hat{\alpha}_0$ et $\hat{\alpha}_1$ au lieu de l'ensemble des paramètres des vecteurs $\theta_0$ et $\theta_1$, ce qui réduit considérablement le coût de codage des informations de mouvement global. $\theta_0$ et $\theta_1$ sont ensuite déduits à partir de $\hat{\alpha}_0$, $\hat{\alpha}_1$ et $\theta$ à l'aide des équations (5).

Un second exemple de mise en oeuvre de l'invention, à un degré de liberté, a pour principe d'imposer une contrainte sur les paramètres $M_0$ et $T_0$, et d'en déduire les valeurs de $M_1$ et $T_1$. Dans ce cas, seul un paramètre scalaire $\alpha$ doit être estimé et codé (ou décodé) pour caractériser les mouvements globaux avant et arrière.

$M_0$ et $T_0$ sont donc contraints à être proportionnels à M et T. Cela se traduit par l'expression suivante :

$$\begin{cases} M_0 = \alpha.M \\ T_0 = \alpha.T \end{cases} \qquad (8)$$

En combinant les expressions (3), (4) et (8), il est aisé de relier le couple ($M_1$, $T_1$) au couple (M, T) par les expressions :

$$\begin{cases} M_1 = (\alpha - 1).(I - M)^{-1} M \\ T_1 = (\alpha - 1).(I - M)^{-1} T \end{cases} \qquad (9)$$

Ainsi, ayant codé (ou décodé) $\alpha$ et connaissant $\theta$, $\theta_0$ est déduit par $\theta_1$ grâce aux expressions (8) et (9).

Au codeur, pour l'estimation de $\alpha$, une solution sous-optimale est de procéder en ne tenant compte que d'un sens en se basant sur l'expression (7). L'optimisation peut aussi se faire, par exemple, en prenant en compte les deux images compensées en mouvement avant (paramètre $\theta_0$) et arrière (paramètre $\theta_1$), selon l'expression suivante :

$$\hat{\alpha} = \arg\min_{\alpha} \left( \begin{array}{l} \sum_{p \in R} \left( B_{t,\theta_0}[p] + \alpha.u_\theta(p).B_x[p] + \alpha.v_\theta(p).B_y[p] \right)^2 + \\ \sum_{p \in R} \left( B_{t,\theta_1}[p] + (\alpha - 1).u_{\theta''}(p).B_x[p] + (\alpha - 1).v_{\theta''}(p).B_y[p] \right)^2 \end{array} \right) \qquad (10)$$

dans laquelle $\theta'' = ((I-M)^{-1} \times M, (I-M)^{-1} \times T)$. La résolution de cette équation conduit alors à l'expression :

$$\hat{\alpha} = \frac{\sum_{p \in R} \left( B_{t,\theta_0}[p] S_\theta(p) + B_{t,\theta_1}[p] S_{\theta''}(p) - S_{\theta''}^2(p) \right)}{\sum_{p \in R} \left( S_\theta^2(p) + S_{\theta''}^2(p) \right)} \qquad (11)$$

dans laquelle $S_\theta(p) = u_\theta(p).B_x[p]+v_\theta(p).B_y[p]$ et $S_{\theta''}(p) = u_{\theta''}(p).B_x[p]+v_{\theta''}(p).B_y[p]$.

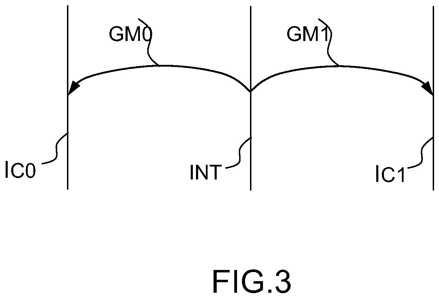

Le figure 3 illustre le principe de dépendance temporelle entre images de référence, appelées images clés dans la suite de la description, et images intermédiaires. L'exemple de la figure considère un groupe d'images, habituellement désigné par l'acronyme GOP venant de l'expression anglo-saxonne « Group of Picture », formé de deux images clés IC0, IC1 et encadrant une ou des images intermédiaires INT. Le procédé de codage selon l'invention opère sur des zones de traitement pouvant correspondre, par exemples, à un ou plusieurs blocs ou macroblocs.

Les images clés du GOP IC0 et IC1 sont codées en premier. Le codage est effectué selon une approche conventionnelle, les outils de codage basés GMC pouvant être également mis en oeuvre. Ainsi des zones d'une image clé peuvent être codées ou servir de référence, avec une prédiction GMC et d'autres non. Il est alors possible de déduire au niveau du codeur et du décodeur une carte de segmentation binaire indiquant si une zone, et donc les pixels qui la composent, est de type GMC ou non.

L'invention porte notamment sur le codage des images intermédiaires INT. Pour une zone à coder d'une image intermédiaire donnée, il est supposé pour la suite de la description que les paramètres de mouvement global vers l'avant et vers l'arrière notés GM0 et GM1 ont été préalablement estimés et codés. Il est également pris comme hypothèse que les images clés IC0 et IC1 sont reconstruites afin de servir d'images de référence, les images intermédiaires déjà codées pouvant aussi être disponibles comme images de référence. Enfin, une carte de segmentation binaire est calculée pour chaque image par le module de décision de l'encodeur et indique pour chaque pixel de l'image de référence s'il est de type GMC ou non.

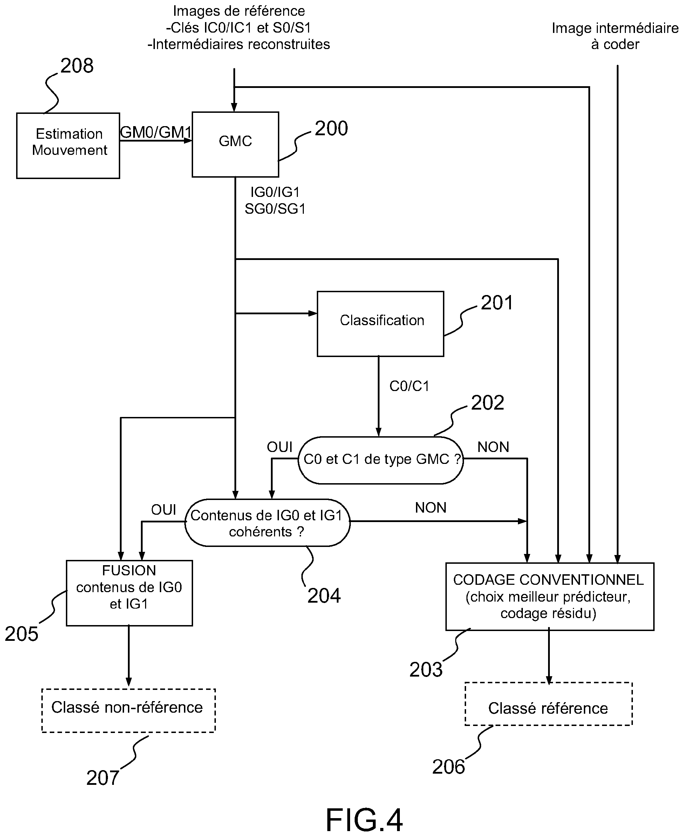

La figure 4 donne un exemple de mise en oeuvre du procédé de codage selon l'invention.

Le procédé de codage peut être décomposé en plusieurs étapes.

Une première étape 200 réalise la compensation de mouvement global GMC des images clés IC0 et IC1. Leurs cartes de segmentation associées S0 et S1, déterminées préalablement par un module de décision de l'encodeur, ou par décodage des modes de codage au décodeur, sont utilisées en entrée, ainsi que les paramètres de mouvement GM0 et GM1 déterminés préalablement par un module d'estimation des paramètres de mouvement 208. Les images IG0 et IG1 sont alors obtenues, ces dernières correspondant respectivement aux images IC0 et IC1 compensées en mouvement suivant les modèles de mouvement GM0 et GM1. Par ailleurs, deux cartes de segmentation SG0 et SG1 associées aux images IG0 et IG1 sont transposées à partir des cartes de segmentation S0 et S1 par compensation de mouvement suivant les modèles de mouvement GM0 et GM1.

L'image intermédiaire à coder est découpée en zones de traitement. Ce découpage peut être automatique ou adaptatif. A titre d'exemple, une zone de traitement peut correspondre à un macrobloc de l'image à coder. Une succession d'étapes est ensuite appliquée pour chacune des zones de l'image intermédiaire à coder. Dans la suite de la description, la zone en cours de traitement est appelée « zone courante ».

Un classification 201 des zones correspondantes est réalisée en s'appuyant sur les cartes de segmentation SG0 et SG1. Chaque zone est associée, par exemple, à une classe parmi deux possibles. Chacune desdites classes identifie respectivement une zone « GMC » ou « non-GMC ». Ainsi, pour la zone courante, une variable C0 associée à IG0 porte cette information de classe. De la même manière, une variable C1 est associée à IG1. A titre d'exemple, les deux classes peuvent être définies en dénombrant la proportion de pixels classés « GMC » de l'image dans la zone considérée et de comparer cette proportion à un seuil donné η compris entre 0 et 1, et ce à l'aide des cartes de segmentation SG0 et SG1.

Il est aussi possible de ne pas utiliser les cartes S0, S1, SG0 et SG1. Dans ce cas, C0 et C1 sont, par exemple, systématiquement considérées comme «GMC».

Il est ensuite vérifié 202 si C0 et C1 sont de type GMC. Dans cet exemple de mise en oeuvre, si C0 ou C1 ne sont pas de type « GMC », un codage conventionnel 203 de la zone est effectué. Ce codage conventionnel peut être, par exemple, de type prédiction spatiale, prédiction temporelle monodirectionnelle ou prédiction temporelle bidirectionnelle. Le codage conventionnel peut toujours employer la prédiction GMC, mais ceci sera un mode parmi d'autres devant être signalé au décodeur dans le flux binaire.

Lorsque C0 et C1 sont de type « GMC », la cohérence dans la zone considérée des images IG0 et IG1 est testée 204. La notion de cohérence entre zone d'images est détaillée plus loin dans la description.

Si les contenus desdites images sont considérés cohérents, le signal est généré par fusion 205 de la zone traité de IG0 et IG1, ce qui implique qu'aucune information n'a besoin d'être codée. Les zones construites par fusion ne nécessitent le codage d'aucune information additionnelle et correspondent donc à un coût de codage nul, ce qui est évidemment très avantageux si lesdites zones sont nombreuses. Le mode de codage ainsi mis en oeuvre est un mode implicite, qui ne nécessite aucune information de signalisation. Ce mode de codage, testé côté codeur, est aussi testé côté décodeur. Le décodeur est alors lui-même capable, sans information de signalisation, de savoir si la zone courante est construite selon ce mode de codage GMC implicite ou non.

Si les contenus sont sensiblement différents, et donc que la cohérence n'est pas vérifiée, un codage conventionnel 203 de la zone est effectué. La prédiction GMC peut toujours être utilisée comme un des modes de prédiction possibles.

L'image intermédiaire codée en utilisant le procédé selon l'invention est donc composée de zones prédites 207 ne pouvant être utilisées comme référence pour le codage d'autres images intermédiaires et de zones reconstruites 206 pouvant être, quant à elle, utilisées comme références pour le codage d'autres images.

Le procédé de codage, décrit ci-dessus côté encodeur, peut s'appliquer symétriquement au décodeur. Les images clés IC0 et IC1 du GOP sont décodées en premier. Le décodeur, à partir des modes de codage décodés des images clés, construit pour chaque image clé IC0 et IC1 une carte de segmentation binaire S0 et S1 indiquant si une zone, et donc les pixels qui la composent, est de type GMC ou non.

L'invention porte notamment sur le décodage des images intermédiaires INT. Pour une zone à décoder d'une image intermédiaire donnée, les paramètres de mouvement global vers l'avant et vers l'arrière notés GM0 et GM1 sont préalablement décodés.

Le procédé de décodage peut être décomposé en plusieurs étapes.

Une première étape réalise la compensation de mouvement global GMC des images clés IC0 et IC1. Les images IG0 et IG1 sont alors obtenues, ces dernières correspondant respectivement aux images IC0 et IC1 compensées en mouvement suivant les modèles de mouvement GM0 et GM1. Par ailleurs, deux cartes de segmentation SG0 et SG1 associées aux images IG0 et IG1 sont transposées à partir des cartes de segmentation S0 et S1 par compensation de mouvement suivant les modèles de mouvement GM0 et GM1.

L'image intermédiaire à décoder est découpée en zones de traitement. Ce découpage peut être automatique ou adaptatif. A titre d'exemple, une zone de traitement peut correspondre à un macrobloc de l'image à coder. Une succession d'étapes est ensuite appliquée pour chacune des zones de l'image intermédiaire à coder.

Un classification des zones correspondantes est réalisée en s'appuyant sur les cartes de segmentation SG0 et SG1.

Il est ensuite vérifié si C0 et C1 sont de type GMC. Dans cet exemple de mise en oeuvre, si C0 ou C1 ne sont pas de type « GMC », un décodage des informations de codage (mode de codage, paramètres associés - par exemple direction de prédiction intra, vecteurs mouvements - résidu de prédiction) pour la zone courante est effectué. Ces informations doivent donc alors être présentes dans le flux binaire.

Lorsque C0 et C1 sont de type « GMC », la cohérence dans la zone considérée des images IG0 et IG1 est testée.

Si les contenus desdites images sont considérés cohérents, le signal est généré par fusion de la zone traité de IG0 et IG1, ce qui implique qu'aucune information n'a besoin d'être décodée. Les zones construites par fusion ne nécessitent le décodage d'aucune information additionnelle.

Si les contenus sont sensiblement différents, et donc que la cohérence n'est pas vérifiée, un décodage des informations de codage est effectué. Ces informations doivent donc alors être présentes dans le flux binaire.

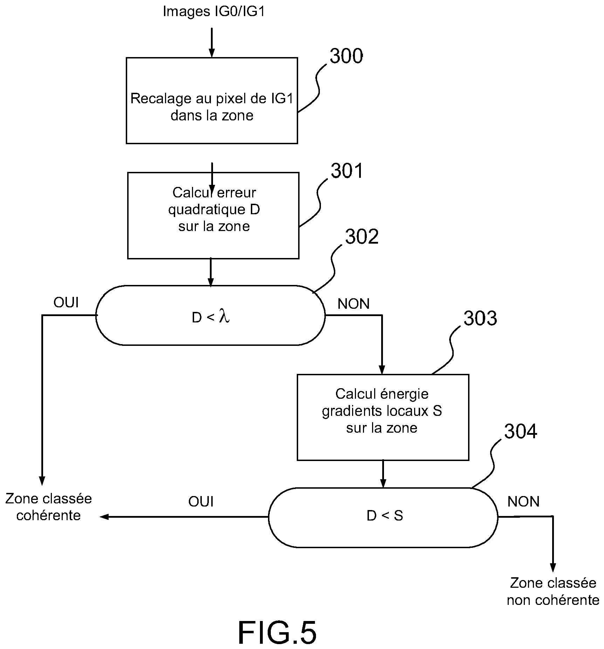

La figure 5 présente une méthode pour tester la cohérence d'une zone sur deux images différentes. La notion de cohérence entre images a été abordée avec la figure précédente. La mesure de cohérence des deux signaux IG0 et IG1 dans la zone courante peut se faire par des mesures classiques de distorsion, telle que l'erreur quadratique moyenne. Cependant, du fait des limitations possibles de l'estimateur de mouvement global et de la quantification nécessaire lors du codage des paramètres de mouvement global, les signaux IG0 et IG1 ne seront jamais parfaitement alignés et un léger décalage a de très grandes chances d'apparaître, même si les deux signaux sont jugés cohérents. Ce décalage peut être d'autant plus important que le modèle de mouvement s'éloigne d'un modèle translationnel, c'est-à-dire d'un modèle où tous les pixels d'une zone se déplacent selon le même vecteur. Dans ce cas, le mouvement dépend de la position du pixel. Lorsque l'on est loin du point d'origine, une erreur infime d'une composante non translationnelle du modèle va se traduire par un écart important du vecteur mouvement issu du modèle. L'erreur quadratique moyenne seule ne permet pas de prendre en compte ce possible décalage.

Afin de prendre en compte ce décalage, une approche est proposée dans le cadre de l'invention.

Une première étape 300 a notamment pour objectif un recalage au pixel de IG1 par compensation de mouvement locale de IG1 par rapport à IG0. Cette compensation est faite avec un vecteur de translation, d'une précision au pixel, et avec une excursion maximum $exc_{max}$ limitée. L'excursion vaut par exemple 2 ou 3 pixels. Pour ce faire un estimateur classique de type « block-matching » peut être utilisé. Ce type d'algorithme a pour but de rechercher un vecteur minimisant l'erreur quadratique moyenne. Ceci est mis en oeuvre afin de corriger les décalages importants dus aux erreurs du modèle de mouvement.

Lors d'une seconde étape, l'erreur quadratique moyenne est calculée 301 sur la zone courante. Cette erreur D peut s'exprimer avec l'expression suivante :

$$D = \sum_{p \in Z} \left( IG0[p] - IG1_{mc}[p] \right)^2 \qquad (1)$$

dans laquelle Z désigne la zone considérée, p un pixel et $IG1_{mc}$ l'image compensée en mouvement de IG1.

Il est possible d'intégrer dans l'équation (1) la variation des moyennes, ce qui mène à l'expression suivante :

$$D = \sum_{p \in Z} \left( IG0[p] - \mu0 - IG1_{mc}[p] + \mu1 \right)^2 \qquad (2)$$

dans laquelle $\mu0$ et $\mu1$ sont les moyennes estimées des luminances respectives de IG0 et de $IG1_{mc}$ sur la zone courante Z.

Cette estimation est suivie d'une comparaison directe des signaux pour les zones à faible gradient local. Si D est inférieur à un seuil prédéfini $\lambda$, IG0 et IG1 sont considérées cohérentes sur la zone. Le seuil $\lambda$ peut, par exemple, prendre comme valeur $5^2 \times N_Z$, $N_Z$ étant le nombre de points de la zone courante Z. Cela implique, dans ce cas, qu'un écart moyen inter-signaux de 5 est toléré.

Si le test précédent 302 est négatif, une mesure du gradient local est effectuée 303, et ce pour les zones à fort gradient local. La forte valeur de D peut être due, par exemple, à un léger décalage, inférieur au pixel, d'une zone texturée et donc à fort gradients. Si les deux signaux sont cohérents, $IG1_{mc}$ peut s'exprimer pour tout pixel p dans la zone courante avec l'expression :

$$IG1_{mc}[p] \approx IG0[p + \delta] \qquad (3)$$

dans laquelle $\delta = (\delta x, \delta y)$ est un vecteur dont les deux composantes $\delta x$ et $\delta y$ sont d'amplitude inférieure à 1, puisqu'un recalage au pixel a déjà été fait.

Il est alors possible, après développement de Taylor de l'équation (3) et en considérant l'expression (2) de déterminer une borne supérieure S de D dont l'expression est :

$$D \le S = \sum_{p \in Z}\left(\frac{\partial IG0}{\partial x}[p]\right)^2 + \sum_{p \in Z}\left(\frac{\partial IG0}{\partial y}[p]\right)^2 + 2.\left|\sum_{p \in Z}\left(\frac{\partial IG0}{\partial x}[p]\frac{\partial IG0}{\partial y}[p]\right)\right| \qquad (4)$$

Les gradients locaux sont donc calculés 303, puis la somme S est comparée 304 à D. Si D est inférieur ou égal à S, IG0 et IG1 sont considérées cohérentes sur la zone courante Z. Dans le cas contraire, IG0 et IG1 sont considérées non cohérentes sur la zone courante.

Certains paramètres tels $exc_{max}$ et $\lambda$ intervenant dans l'algorithme peuvent être codés et transmis au décodeur.

Il a été vu avec l'exemple de la figure 4 que lorsque la zone comparée est considérée cohérente, une fusion des deux signaux IG0 et IG1 peut être envisagée. L'algorithme de fusion vise à mélanger les deux signaux de façon satisfaisante, c'est-à-dire sans faire apparaître d'échos dus au léger décalage spatial mentionné précédemment. Une solution est d'utiliser des algorithmes de plaquage sans couture, de type « Graph cut ». Un exemple de ce type de technique est décrit dans l'article de Vivek Kwatra et al. intitulé « Graphcut Textures : Image and Video Synthesis Using Graph Cuts », Proc. ACM Transactions on Graphics, Siggraph'03. Ces algorithmes permettent d'assembler des parcelles de texture en limitant les artéfacts visuels de type coutures apparentes.

**Revendications**

1.  Procédé de codage vidéo d'au moins une séquence d'images numériques, les images de ladite séquence pouvant être des images intermédiaires (INT) ou des images clés (IC0, IC1) utilisées comme références pour le codage par compensation de mouvement des images intermédiaires (INT), le procédé de codage étant **caractérisé en ce que** :

    - les images intermédiaires (INT) sont codées par zone en se basant sur une compensation en mouvement suivant des modèles de mouvement global (200) dans les sens avant (GM1) et arrière (GMO) à partir des images clés (IC0, IC1), une zone d'une image intermédiaire (INT) étant construite :

        - par fusion (205) des zones correspondantes des images clés compensées en mouvement (IG0, IG1) lorsque lesdites zones correspondantes des images clés (IC0, IC1) sont compensées suivant lesdits modèles de mouvement global (202) et que les contenus desdites zones correspondantes des images clés compensées en mouvement (IG0, IG1) sont cohérents au sens d'une mesure (204) ; ou
        - par codage prédictif conventionnel (203) lorsque lesdites zones correspondantes des images clés ne sont pas compensées suivant des modèles de mouvement global (202) ou lorsque lesdites zones correspondantes des images clés sont compensées (IG0, IG1) suivant des modèles de mouvement global (202) mais que les contenus desdites zones correspondantes des images clés compensées en mouvement (IG0, IG1) ne sont pas cohérents au sens d'une mesure (204).

2.  Procédé de codage vidéo selon la revendication 1, **caractérisé en ce que** les images clés (IC0, IC1) sont codées avant les images intermédiaires et que des cartes de segmentation (S0, S1) associée auxdites images clés sont calculées de manière à pouvoir déterminer si lesdites zones correspondantes des images clés sont compensées (IG0, IG1) suivant un modèle de mouvement global (202).

3.  Procédé de codage vidéo selon l'une quelconque des revendications 1 ou 2, **caractérisé en ce que** les paramètres du modèle de mouvement global (GMO, GM1) sont estimés et codés (208) avant le codage des images intermédiaires (INT).

4.  Procédé de codage vidéo selon la revendication 3, **caractérisé en ce que** des images clés compensées en mouvement (IG0, IG1) sont déduites (200) des images clés (IC0, IC1) en utilisant au moins les paramètres de mouvement global (GMO, GM1).

5.  Procédé de codage vidéo selon la revendication 4, **caractérisé en ce que** des cartes de segmentation (SGO, SG1) associées aux images clés compensées en mouvement (IG0, IG1) sont déduites des cartes de segmentation (S0, S1) associées aux images clés (IC0, IC1) par transpositions en utilisant au moins les paramètres d'estimation de mouvement (GMO, GM1).

6.  Procédé de codage vidéo selon l'une quelconque des revendications 1 à 5, **caractérisé en ce que** les zones correspondantes des images clés compensées en mouvement (IG0, IG1) sont considérées comme étant compen-

EP 2 374 278 B1

sées par un modèle de mouvement global en fonction de leur proportion de pixels (C0, C1) compensés par ce modèle de mouvement global, ladite proportion étant comparée à un seuil η compris entre 0 et 1, une zone étant considérée comme étant compensée par un modèle de mouvement global lorsque ladite proportion est supérieure à η et considérée comme n'étant pas compensée par un modèle de mouvement global dans le cas contraire.

**7.** Procédé de codage vidéo selon la revendication 6, **caractérisé en ce que** la proportion par zone des images clés compensées en mouvement (IG0, IG1) est déduite des cartes de segmentation (SGO, SG1).

**8.** Procédé de codage vidéo selon l'une quelconque des revendications 6 ou 7, **caractérisé en ce que** si au moins une zone d'une des images clés compensées en mouvement (IG0, IG1) et utilisées comme référence pour le codage de la zone à coder d'une image intermédiaire (INT) n'est pas considérée comme étant compensée par un modèle de mouvement global, un codage conventionnel de ladite zone est effectué.

**9.** Procédé de codage vidéo selon l'une quelconque des revendications 6 à 8, **caractérisé en ce que** si les zones des images clés compensées en mouvement (IG0, IG1) utilisées comme références pour le codage d'une zone d'une image intermédiaire (INT) sont considérées comme étant compensées par un modèle de mouvement global, la cohérence des contenus desdites zones est analysée (204) par comparaison des signaux desdites zones des images clés compensées en mouvement.

**10.** Procédé de codage vidéo selon la revendication 9, **caractérisé en ce que** l'erreur quadratique moyenne D de la zone à coder est calculée et est comparée à un seuil prédéfini $\lambda$ (302) de manière à distinguer les zones à faible gradient local des zones à fort gradient local, la zone étant considérée à faible gradient local et classée « cohérente » si D est inférieur à $\lambda$ et étant considérée à fort gradient local dans le cas contraire.

**11.** Dispositif de codage vidéo d'au moins une séquence d'images numériques, les images de ladite séquence pouvant être des images intermédiaires (INT) ou des images clés (IC0, IC1) utilisées comme références pour le codage par compensation de mouvement des images intermédiaires (INT), le dispositif de codage étant **caractérisé en ce qu'**il comporte des moyens pour :

- coder les images intermédiaires (INT) par zone en se basant sur une compensation en mouvement suivant des modèles de mouvement global dans les sens avant (GM1) et arrière (GMO) à partir des images clés (IC0, IC1), une zone d'une image intermédiaire (INT) étant construite :

- par fusion des zones correspondantes des images clés compensées en mouvement (IG0, IG1) lorsque lesdites zones correspondantes des images clés (IC0, IC1) sont compensées suivant lesdits modèles de mouvement global (202) et que les contenus desdites zones correspondantes des images clés compensées en mouvement (IG0, IG1) sont cohérents au sens d'une mesure (204) ; ou
- par codage prédictif conventionnel lorsque lesdites zones correspondantes des images clés ne sont pas compensées suivant des modèles de mouvement global ou lorsque lesdites zones correspondantes des images clés sont compensées (IG0, IG1) suivant des modèles de mouvement global mais que les contenus desdites zones correspondantes des images clés compensées en mouvement (IG0, IG1) ne sont pas cohérents au sens d'une mesure.

**12.** Procédé de décodage vidéo d'au moins une séquence d'images numériques préalablement codée en utilisant le procédé selon l'une quelconque des revendications 1 à 10, les images de ladite séquence pouvant être des images intermédiaires (INT) ou des images clés (IC0, IC1) utilisées comme références pour le décodage par compensation de mouvement des images intermédiaires (INT), le dispositif de décodage étant **caractérisé en ce qu'**il :

- décode les images intermédiaires (INT) par zone en se basant sur une compensation en mouvement suivant des modèles de mouvement global dans les sens avant (GM1) et arrière (GMO) à partir des images clés décodées (IC0, IC1), une zone d'une image intermédiaire (INT) étant reconstruite :
- par fusion des zones correspondantes des images clés compensées en mouvement (IG0, IG1) lorsque lesdites zones correspondantes des images clés (IC0, IC1) sont compensées suivant lesdits modèles de mouvement global et que les contenus desdites zones correspondantes des images clés compensées en mouvement (IG0, IG1) sont cohérents au sens d'une mesure; ou
- par codage prédictif conventionnel lorsque lesdites zones correspondantes des images clés ne sont pas compensées suivant des modèles de mouvement global ou lorsque lesdites zones correspondantes des images clés sont compensées (IG0, IG1) suivant des modèles de mouvement global mais que les contenus desdites zones correspondantes des images clés (IG0, IG1) ne sont pas cohérents au sens d'une mesure.

**13.** Dispositif de décodage vidéo d'au moins une séquence d'images numériques préalablement codée en utilisant le procédé selon l'une quelconque des revendications 1 à 10, les images de ladite séquence pouvant être des images intermédiaires (INT) ou des images clés (IC0, IC1) utilisées comme références pour le décodage par compensation de mouvement des images intermédiaires (INT), le dispositif de décodage étant **caractérisé en ce qu'**il comporte des moyens pour :

- décoder les images intermédiaires (INT) par zone en se basant sur une compensation en mouvement suivant des modèles de mouvement global dans les sens avant (GM1) et arrière (GMO) à partir des images clés décodées (IC0, IC1), une zone d'une image intermédiaire (INT) étant reconstruite :

- par fusion des zones correspondantes des images clés compensées en mouvement (IG0, IG1) lorsque lesdites zones correspondantes des images clés (IC0, IC1) sont compensées suivant lesdits modèles de mouvement global et que les contenus desdites zones correspondantes des images clés compensées en mouvement (IG0, IG1) sont cohérents au sens d'une mesure; ou- par codage prédictif conventionnel lorsque lesdites zones correspondantes des images clés ne sont pas compensées suivant des modèles de mouvement global ou lorsque lesdites zones correspondantes des images clés sont compensées (IG0, IG1) suivant des modèles de mouvement global mais que les contenus desdites zones correspondantes des images clés compensées en mouvement (IG0, IG1) ne sont pas cohérents au sens d'une mesure.

**14.** Procédé de codage vidéo selon la revendication 1, **caractérisé en ce que** une estimation des vecteurs de paramètres d'un modèle de mouvement global « arrière » $\theta_0=(M_0,T_0)$ et « avant » $\theta_1=(M_1,T_1)$ d'une image ou partie d'image intermédiaire, pour la mise en oeuvre de la dite compensation globale de mouvement respectivement dans le sens arrière et avant, est contrainte à deux degrés de liberté en déduisant $\theta_0$ et $\theta_1$ de deux paramètres $\alpha_0$ et $\alpha_1$ vérifiant les équations, I étant la matrice identité de dimension 2*2, M étant une matrice de dimension 2*2 et T étant une matrice de dimension 2*1, (M,T) correspondant au vecteur des paramètres associés à une estimation arrière de mouvement global entre deux images clés. :

$$\begin{cases} M_0 = \alpha_0.M \\ T_0 = \alpha_0.T \end{cases} \quad \text{et} \quad \begin{cases} M_1 = \alpha_1.\left[I-(I-M)^{-1}\right] \\ T_1 = \alpha_1.\left[-(I-M)^{-1}\times T\right] \end{cases}$$

**15.** Procédé de codage vidéo selon la revendication 1, **caractérisé en ce que** une estimation des paramètres d'un modèle de mouvement global « arrière » $\theta_0=(M_0,T_0)$ et « avant » $\theta_1=(M_1,T_1)$ d'une image intermédiaire, pour la mise en oeuvre de la dite compensation globale de mouvement respectivement dans le sens arrière et avant, est contrainte à un degré de liberté en déduisant $\theta_0$ et $\theta_1$ d'un paramètre $\alpha$ vérifiant les équations, I étant la matrice identité de dimension 2*2, M étant une matrice de dimension 2*2 et T étant une matrice de dimension 2*1, (M,T) correspondant au vecteur des paramètres associés à une estimation arrière de mouvement global entre deux images clés. :

$$\begin{cases} M_0 = \alpha.M \\ T_0 = \alpha.T \end{cases} \quad \text{et} \quad \begin{cases} M_1 = (\alpha-1)(I-M)^{-1}M \\ T_1 = (\alpha-1)(I-M)^{-1}T \end{cases}$$

**Patentansprüche**

**1.** Verfahren zur Videocodierung von mindestens einer Folge von digitalen Bildern, wobei die Bilder der besagten Folge Zwischenbilder (INT) oder Schlüsselbilder (IC0, IC1) sein können, die als Referenzen für die Codierung durch Bewegungskompensation der Zwischenbilder (INT) verwendet werden, wobei das Verfahren zur Codierung **dadurch gekennzeichnet ist, dass**:

- die Zwischenbilder (INT) zonenweise codiert werden, basierend auf einer Bewegungskompensation nach Globalbewegungsmodellen (200) in Vorwärtsrichtung (GM1) und Rückwärtsrichtung (GMO) anhand der Schlüsselbilder (IC0, IC1), wobei eine Zone eines Zwischenbildes (INT) konstruiert wird:

- durch Fusion (205) der entsprechenden Zonen der bewegungskompensierten Schlüsselbilder (IG0, IG1), wenn die besagten entsprechenden Zonen der Schlüsselbilder (IC0, IC1) nach den besagten Globalbewegungsmodellen (202) kompensiert werden und die Inhalte der besagten entsprechenden Zonen der bewegungskompensierten Schlüsselbilder (IG0, IG1) im Sinne eines Maßes (204) kohärent sind; oder

- durch konventionelle Vorhersagecodierung (203), wenn die besagten entsprechenden Zonen der Schlüsselbilder nicht nach Globalbewegungsmodellen (202) kompensiert werden oder wenn die besagten entsprechenden Zonen der Schlüsselbilder nach Globalbewegungsmodellen (202) kompensiert werden (IG0, IG1), aber die Inhalte der besagten entsprechenden Zonen der bewegungskompensierten Schlüsselbilder (IG0, IG1) im Sinne eines Maßes (204) nicht kohärent sind.

2. Verfahren zur Videocodierung nach Anspruch 1, **dadurch gekennzeichnet, dass** die Schlüsselbilder (IC0, IC1) vor den Zwischenbildern codiert werden und dass den besagten Schlüsselbildern zugeordnete Segmentierungskarten (S0, S1) so berechnet werden, dass bestimmt werden kann, ob die besagten entsprechenden Zonen der Schlüsselbilder nach einem Globalbewegungsmodell(202) kompensiert werden (IG0, IG1).

3. Verfahren zur Videocodierung nach einem der Ansprüche 1 oder 2, **dadurch gekennzeichnet, dass** die Parameter des Globalbewegungsmodells (GMO, GM1) vor der Codierung der Zwischenbilder (INT) abgeschätzt und codiert (208) werden.

4. Verfahren zur Videocodierung nach Anspruch 3, **dadurch gekennzeichnet, dass** bewegungskompensierte Schlüsselbilder (IG0, IG1) von Schlüsselbildern (IC0, IC1) abgeleitet werden (200), indem mindestens die Globalbewegungsparameter (GMO, GM1) verwendet werden.

5. Verfahren zur Videocodierung nach Anspruch 4, **dadurch gekennzeichnet, dass** den bewegungskompensierten Schlüsselbildern (IG0, IG1) zugeordnete Segmentierungskarten (SGO, SG1) von den den Schlüsselbildern (IC0, IC1) zugeordneten Segmentierungskarten (S0, S1) durch Transpositionen abgeleitet werden, indem mindestens die Parameter zur Bewegungsabschätzung (GMO, GM1) verwendet werden.

6. Verfahren zur Videocodierung nach einem der Ansprüche 1 bis 5, **dadurch gekennzeichnet, dass** die entsprechenden Zonen der bewegungskompensierten Schlüsselbilder (IG0, IG1) als kompensiert durch ein Globalbewegungsmodell entsprechend ihres Anteils an Pixeln (C0, C1), die durch dieses Globalbewegungsmodell kompensiert werden, angesehen werden, wobei der besagte Anteil mit einem Schwellenwert $\eta$ zwischen 0 und 1 verglichen wird, wobei eine Zone als durch ein Globalbewegungsmodell kompensiert angesehen wird, wenn der besagte Anteil höher als $\eta$ ist, und im gegenteiligen Fall als nicht durch ein Globalbewegungsmodell kompensiert angesehen wird.

7. Verfahren zur Videocodierung nach Anspruch 6, **dadurch gekennzeichnet, dass** der Anteil pro Zone der bewegungskompensierten Schlüsselbilder (IG0, IG1) von den Segmentierungskarten (SGO, SG1) abgeleitet wird.

8. Verfahren zur Videocodierung nach einem der Ansprüche 6 oder 7, **dadurch gekennzeichnet, dass**, wenn mindestens eine Zone von einem der bewegungskompensierten und als Referenz für die Codierung der zu codierenden Zone eines Zwischenbildes (INT) verwendeten Schlüsselbilder (IG0, IG1) nicht als durch ein Globalbewegungsmodell kompensiert angesehen wird, eine konventionelle Codierung der besagten Zone vorgenommen wird.

9. Verfahren zur Videocodierung nach einem der Ansprüche 6 bis 8, **dadurch gekennzeichnet, dass**, wenn die Zonen der bewegungskompensierten, als Referenzen für die Codierung einer Zone eines Zwischenbildes (INT) verwendeten Schlüsselbilder (IG0, IG1) als durch ein Globalbewegungsmodell kompensiert angesehen werden, die Kohärenz der Inhalte der besagten Zonen durch Vergleich der Signale der besagten Zonen der bewegungskompensierten Schlüsselbilder analysiert wird (204).

10. Verfahren zur Videocodierung nach Anspruch 9, **dadurch gekennzeichnet, dass** der mittlere quadratische Fehler D der zu codierenden Zone berechnet und mit einem vorbestimmten Schwellenwert $\lambda$(302) verglichen wird, dergestalt, dass die Zonen mit niedrigem lokalen Gradienten von den Zonen mit hohem lokalen Gradienten unterschieden werden, wobei die Zone als Zone mit niedrigem lokalen Gradienten angesehen und als "kohärent" eingestuft wird, wenn D geringer als $\lambda$ ist, und im gegenteiligen Fall als Zone mit hohem lokalen Gradienten angesehen wird.

11. Vorrichtung zur Videocodierung von mindestens einer Folge von digitalen Bildern, wobei die Bilder der besagten Folge Zwischenbilder (INT) oder Schlüsselbilder (IC0, IC1) sein können, die als Referenzen für die Codierung durch Bewegungskompensation der Zwischenbilder (INT) verwendet werden, wobei die Vorrichtung zur Codierung **da-**

**durch gekennzeichnet ist, dass** sie Mittel umfasst zum:

- Codieren der Zwischenbilder (INT) zonenweise, basierend auf einer Bewegungskompensation nach Globalbewegungsmodellen in Vorwärtsrichtung (GM1) und Rückwärtsrichtung (GMO) anhand der Schlüsselbilder (IC0, IC1), wobei eine Zone eines Zwischenbildes (INT) konstruiert wird:

- durch Fusion der entsprechenden Zonen der bewegungskompensierten Schlüsselbilder (IG0, IG1), wenn die besagten entsprechenden Zonen der Schlüsselbilder (IC0, IC1) nach den besagten Globalbewegungsmodellen (202) kompensiert werden und die Inhalte der besagten entsprechenden Zonen der bewegungskompensierten Schlüsselbilder (IG0, IG1) im Sinne eines Maßes (204) kohärent sind; oder
- durch konventionelle Vorhersagecodierung, wenn die besagten entsprechenden Zonen der Schlüsselbilder nicht nach Globalbewegungsmodellen kompensiert werden oder wenn die besagten entsprechenden Zonen der Schlüsselbilder nach Globalbewegungsmodellen kompensiert werden (IG0, IG1), aber die Inhalte der besagten entsprechenden Zonen der bewegungskompensierten Schlüsselbilder (IG0, IG1) im Sinne eines Maßes nicht kohärent sind.

12. Verfahren zur Videodecodierung von mindestens einer vorab codierten Folge von digitalen Bildern, unter Verwendung des Verfahrens nach einem der Ansprüche 1 bis 10, wobei die Bilder der besagten Folge Zwischenbilder (INT) oder Schlüsselbilder (IC0, IC1) sein können, die als Referenzen für die Decodierung durch Bewegungskompensation der Zwischenbilder (INT) verwendet werden, wobei die Vorrichtung zur Decodierung **dadurch gekennzeichnet ist, dass** sie:

- die Zwischenbilder (INT) zonenweise decodiert, basierend auf einer Bewegungskompensation nach Globalbewegungsmodellen in Vorwärtsrichtung (GM1) und Rückwärtsrichtung (GMO) anhand der decodierten Schlüsselbilder (IC0, IC1), wobei eine Zone eines Zwischenbildes (INT) rekonstruiert wird:

- durch Fusion der entsprechenden Zonen der bewegungskompensierten Schlüsselbilder (IG0, IG1), wenn die besagten entsprechenden Zonen der Schlüsselbilder (IC0, IC1) nach den besagten Globalbewegungsmodellen kompensiert werden und die Inhalte der besagten entsprechenden Zonen der bewegungskompensierten Schlüsselbilder (IG0, IG1) im Sinne eines Maßes kohärent sind; oder
- durch konventionelle Vorhersagecodierung, wenn die besagten entsprechenden Zonen der Schlüsselbilder nicht nach Globalbewegungsmodellen kompensiert werden oder wenn die besagten entsprechenden Zonen der Schlüsselbilder nach Globalbewegungsmodellen kompensiert werden (IG0, IG1), aber die Inhalte der besagten entsprechenden Zonen der Schlüsselbilder (IG0, IG1) im Sinne eines Maßes nicht kohärent sind.

13. Vorrichtung zur Videodecodierung von mindestens einer vorab codierten Folge von digitalen Bildern unter Verwendung des Verfahrens nach einem der Ansprüche 1 bis 10, wobei die Bilder der besagten Sequenz Zwischenbilder (INT) oder Schlüsselbilder (IC0, IC1) sein können, die als Referenzen für die Decodierung durch Bewegungskompensation der Zwischenbilder (INT) verwendet werden, wobei die Vorrichtung zur Decodierung **dadurch gekennzeichnet ist, dass** die Mittel umfasst zum:

- Decodieren der Zwischenbilder (INT) zonenweise, basierend auf einer Bewegungskompensation nach Globalbewegungsmodellen in Vorwärtsrichtung (GM1) und Rückwärtsrichtung (GMO) anhand der decodierten Schlüsselbilder (IC0, IC1), wobei eine Zone eines Zwischenbildes (INT) rekonstruiert wird:

- durch Fusion der entsprechenden Zonen der bewegungskompensierten Schlüsselbilder (IG0, IG1), wenn die besagten entsprechenden Zonen der Schlüsselbilder (IC0, IC1) nach den besagten Globalbewegungsmodellen kompensiert werden und die Inhalte der besagten entsprechenden Zonen der bewegungskompensierten Schlüsselbilder (IG0, IG1) im Sinne eines Maßes kohärent sind; oder
- durch konventionelle Vorhersagecodierung, wenn die besagten entsprechenden Zonen der Schlüsselbilder nicht nach Globalbewegungsmodellen kompensiert werden oder wenn die besagten entsprechenden Zonen der Schlüsselbilder nach Globalbewegungsmodellen kompensiert werden (IG0, IG1), aber die Inhalte der besagten entsprechenden Zonen der bewegungskompensierten Schlüsselbilder (IG0, IG1) im Sinne eines Maßes nicht kohärent sind.

14. Verfahren zur Videocodierung nach Anspruch 1, **dadurch gekennzeichnet, dass** eine Abschätzung der Parame-tervektoren eines "rückwärtsgerichteten" $\Theta_0=(M_0,T_0)$ und "vorwärtsgerichteten" $\Theta_1=(M_1,T_1)$ Globalbewegungsmo-

dells eines Bildes oder Teils eines Zwischenbildes für die Umsetzung der besagten Globalbewegungskompensation jeweils in Rückwärts- und in Vorwärtsrichtung mit zwei Freiheitsgraden verknüpft ist, indem $\Theta_0$ und $\Theta_1$ von zwei Parametern $\alpha_0$ und $\alpha_1$ in Erfüllung der Gleichungen abgeleitet werden, wobei I die 2*2-dimensionale Identitätsmatrix ist, M eine 2*2-dimensionale Matrix ist und T eine 2*1-dimensionale Matrix ist, wobei (M,T) dem Vektor der Parameter entspricht, die einer rückwärtsgerichteten Globalbewegungsabschätzung zwischen zwei Schlüsselbildern zugeordnet sind:

$$\left. \begin{array}{l} M_0=\alpha_0.M \\ T_0=\alpha_0.T \end{array} \right. \quad \text{und} \quad \left. \begin{array}{l} M_1=\alpha_1.I\text{-}\left([\text{-}M)^{-1}\right] \\ T_1=\alpha_1.\text{-}\left(I\text{-}M)^{-1} xT\right] \end{array} \right.$$

15. Verfahren zur Videocodierung nach Anspruch 1, **dadurch gekennzeichnet, dass** eine Abschätzung der Parameter eines "rückwärtsgerichteten" $\Theta_0=(M_0,T_0)$ und "vorwärtsgerichteten" $\Theta_1=(M_1,T_1)$ Globalbewegungsmodells eines Zwischenbildes für die Umsetzung der besagten Globalbewegungskompensation jeweils in Rückwärts- und in Vorwärtsrichtung mit einem Freiheitsgrad verknüpft ist, indem $\Theta_0$ und $\Theta_1$ von einem Parameter $\alpha$ in Erfüllung der Gleichungen abgeleitet werden, wobei I die 2*2-dimensionale Identitätsmatrix ist, M eine 2*2-dimensionale Matrix ist und T eine 2*1-dimensionale Matrix ist, wobei (M,T) dem Vektor der Parameter entspricht, die einer rückwärtsgerichteten Globalbewegungsabschätzung zwischen zwei Schlüsselbildern zugeordnet sind:

$$\left. \begin{array}{l} M_0=\alpha.M \\ T_0=\alpha.T \end{array} \right. \quad \text{und} \quad \left. \begin{array}{l} M_1=(\alpha\text{-}1).(I\text{-}M)^{-1} M \\ T_1=(\alpha\text{-}1).(I\text{-}M)^{-1} T \end{array} \right.$$

## Claims

1. Video coding process with at least one digital frame sequence, where the frames of said sequence can be intermediary frames (INT) or key frames (IC0, IC1) used as references for coding by motion compensation of intermediary frames (INT), the coding process being **characterised in that**:

   - intermediary frames (INT) are coded by zone based on motion compensation according to global motion patterns (200) in the forward (GM1) and backward (GMO) direction using key frames (IC0, IC1), an intermediary frame zone (INT) being generated:

      - by merger (205) of corresponding zones of motion compensated key frames (IG0, IG1) when said corresponding zones of key frames (IC0, IC1) are compensated according to said global motion patterns (202) and the contents of said corresponding zones of motion compensated key frames (IG0, IG1) are consistent with the direction of a measurement (204); or
      - by conventional predictive coding (203) when said corresponding zones of key frames are not compensated according to global motion patterns (202) or when said corresponding zones of key frames are compensated (IG0, IG1) according to global motion patterns (202) but the contents of said corresponding zones of motion compensated key frames (IG0, IG1) are not consistent with the direction of a measurement (204)

2. Video coding process according to claim 1, **characterised in that** the key frames (IC0, IC1) are coded before the intermediary frames and that segmentation cards (S0, S1) associated with said key frames are calculated so as to determine whether said corresponding zones of key frames are compensated (IG0, IG1) according to a global motion pattern (202).

3. Video coding process according to any one of claims 1 or 2, **characterised in that** the global motion pattern parameters (GMO, GM1) are analysed and coded (208) before the coding of intermediary frames (INT).

4. Video coding process according to claim 3, **characterised in that** motion compensated key frames (IG0, IG1) are derived (200) from key frames (IC0, IC1) using at least the global motion parameters (GMO, GM1). GM1).

5. Video coding process according to claim 4, **characterised in that** segmentation maps (SGO, SG1) associated with the motion compensated key frames (IG0, IG1) are derived from segmentation maps (S0, S1) associated with the key frames (IC0, IC1) by transpositions using at least the motion estimation parameters (GM0 GM1).

6. Video coding process according to any one of claims 1 to 5, **characterised in that** the corresponding zones of motion compensated key frames (IG0, IG1) are considered as being compensated by a global motion pattern according to their pixel proportion (C0, C1) compensated by this global motion pattern, said proportion being compared to a threshold $\eta$ ranging between 0 and 1, a zone being considered as compensated by a global motion pattern when said proportion is greater than $\eta$ and considered as not compensated by a global motion pattern otherwise.

7. Video coding process according to claim 6, **characterised in that** the proportion by zone of motion compensated key frames (IG0, IG1) is derived from the segmentation maps (SGO, SG1).

8. Video coding process according to any one of claims 6 or 7, **characterised in that** if at least one zone of one of the motion compensated key frames (SGO, SG1) and used as reference for the coding of the zone to be coded of an intermediary frame (INT) is not considered as compensated by a global motion pattern, a conventional coding of said zone is carried out.

9. Video coding process according to any one of claims 6 to 8, **characterised in that** if the zones of the motion compensated key frames
(IG0, IG1) used as references for the coding of an intermediary frame zone (INT) are considered as compensated by a global motion pattern, the consistency of the contents of said zones is analysed (204) in comparison with the signals of said motion compensated key frame zones.

10. Video coding process according to claim 9, **characterised in that** mean quadratic error D of the zone to be coded is calculated and compared to a predefined threshold $\lambda$ (302) to distinguish the zones with low local gradient from zones with high local gradient, the zone being considered to have low local gradient and classed 'consistent' if D is less than $\lambda$ and being considered to have high local gradient otherwise.

11. Video coding device with at least one digital frame sequence, where the frames of said sequence can be intermediary frames (INT) or key frames (IC0, IC1) used as references for the coding by motion compensation of intermediary frames (INT), the coding device being **characterised in that** it comprises means for:

- coding intermediary frames (INT) by zone based on motion compensation according to global motion patterns in the forward (GM1) and backward (GMO) direction using key frames (IC0, IC1), an intermediary frame zone (INT) being generated:

- by merger of corresponding motion compensated key frame zones (IG0, IG1) when said corresponding key frame zones (IC0, IC1) are compensated according to said global motion patterns (202) and the contents of said corresponding zones of motion compensated key frames (IG0, IG1) are consistent with the direction of a measurement (204); or
- by conventional predictive coding when said corresponding zones of key frames are not compensated according to global motion patterns or when said corresponding zones of key frames are compensated (IG0, IG1) according to global motion patterns but the contents of said corresponding zones of motion compensated key frames (IG0, IG1) are not consistent with the direction of a measurement.

12. Video decoding process with at least one digital frame sequence pre-coded using the process according to any one of claims 1 to 10, where the frames of said sequence can be intermediary frames (INT) or key frames (IC0, IC1) used as references for decoding by motion compensation of intermediary frames (INT), the decoding device being **characterised in that** it:

- decodes intermediary frames (INT) by zone based on motion compensation according to global motion patterns in the forward (GM1) and backward (GMO) direction using the decoded key frames (IC0, IC1), an intermediary frame zone (INT) being regenerated:

- by merger of corresponding motion compensated key frame zones (IG0, IG1) when said corresponding zones of key frames (IC0, IC1) are compensated according to said global motion patterns and the contents of said corresponding zones of motion compensated key frames (IG0, IG1) are consistent with the direction of a measurement; or
- by conventional predictive coding when said corresponding zones of key frames are not compensated according to global motion patterns or when said corresponding zones of key frames are compensated (IG0,

IG1) according to global motion patterns but the contents of said corresponding zones of key frames (IG0, IG1) are not consistent with the direction of a measurement.

13. Video decoding device with at least one digital frame sequence pre-coded using the process according to any one of claims 1 to 10, where the frames of said sequence can be intermediary frames (INT) or key frames (IC0, IC1) used as references for decoding by motion compensation of intermediary frames (INT), the decoding device being **characterised in that** it comprises means for:

- decoding the intermediary frames (INT) by zone based on motion compensation according to global motion patterns in the forward (GM1) and backward (GMO) direction using the decoded key frames (IC0, IC1), an intermediary frame zone (INT) is regenerated:
- by merger of the corresponding zones of motion compensated key frames (IG0, IG1) when said corresponding zones of key frames

(IC0, IC1) are compensated according to said global motion patterns and the contents of said corresponding zones of motion compensated key frames (IG0, IG1) are consistent with the direction of a measurement; or- by conventional predictive coding when said corresponding zones of key frames are not compensated according to global motion patterns or when said corresponding zones of key frames are compensated (IG0, IG1) according to global motion patterns but the contents of said corresponding zones of motion compensated key frames (IG0, IG1) are not consistent with the direction of a measurement.

14. Video coding process according to claim 1, **characterised in that** an estimation of the parameter vectors of a 'backward' $\theta_0=(M_0,T_0)$ and 'forward' $\theta_1=(M_1,T_1)$ global motion pattern of a frame or part of an intermediary frame, for implementation of said global motion compensation respectively forward and backward, is restricted to two degrees of freedom by deducting $\theta_0$ and $\theta_1$ from two parameters $\alpha_0$ and $\alpha_1$ checking the equations, I being the dimension identity matrix 2*2, M being a dimension matrix 2*2 and T being a dimension matrix 2*1, (M,T) corresponding to the parameter vector associated with a backward global motion estimation between two key frames.

$$\begin{cases} M_0 = \alpha_0.M \\ T_0 = \alpha_0.T \end{cases} \quad et \quad \begin{cases} M_1 = \alpha_1.\left[I-(I-M)^{-1}\right] \\ T_1 = \alpha_1.\left[-(I-M)^{-1}\times T\right] \end{cases}$$

15. Video coding process according to claim 1, **characterised in that** an estimation of the parameters of a 'backward' $\theta_0=(M_0,T_0)$ and 'forward' $\theta_1=(M_1,T_1)$ global motion pattern of an intermediary frame, for implementation of said global motion compensation respectively forward and backward, is restricted to one degree of freedom by deducting $\theta_0$ and $\theta_1$ from a parameter $\alpha$ checking the equations, I being the dimension identity matrix 2*2, M being a dimension matrix 2*2 and T being a dimension matrix 2*1, (M,T) corresponding to the parameter vector associated with a backward global motion estimation between two key frames.

$$\begin{cases} M_0 = \alpha.M \\ T_0 = \alpha.T \end{cases} \quad et \quad \begin{cases} M_1 = (\alpha-1)(I-M)^{-1}M \\ T_1 = (\alpha-1)(I-M)^{-1}T \end{cases}$$

$\theta_{30}$

B1

B3

$\theta_{34}$

$\theta_{14}$

$\theta_{20}$

B2

$\theta_{10}$

$\theta_{24}$

P0

P4

$\theta_{40}$

FIG.1

$\theta$

$\theta_0$

$\theta_1$

A

B

C

FIG.2

FIG.3

Images de référence
-Clés IC0/IC1 et S0/S1
-Intermédiaires reconstruites

Image intermédiaire
à coder

208

Estimation
Mouvement

GM0/GM1

GMC

200

IG0/IG1
SG0/SG1

Classification

201

C0/C1

202

OUI — C0 et C1 de type GMC ? — NON

OUI — Contenus de IG0 et IG1
cohérents ? — NON

204

FUSION
contenus de IG0
et IG1

205

CODAGE CONVENTIONNEL
(choix meilleur prédicteur,
codage résidu)

203

Classé non-référence

207

Classé référence

206

FIG.4

Images IG0/IG1

Recalage au pixel de IG1
dans la zone
_300_

Calcul erreur
quadratique D
sur la zone
_301_

_302_

OUI ⟵ D < λ ⟶ NON

_303_

Calcul énergie
gradients locaux S
sur la zone

_304_

Zone classée
cohérente ⟵ OUI ⟵ D < S ⟶ NON

Zone classée
non cohérente

# FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6205178 B1

**Littérature non-brevet citée dans la description**

- **STEINBACH ; WIEGAND ; GIROD.** Using multiple global motion models for improved block-based video coding. *ICIP 1999,* Octobre 1999, vol. 2, 56-60
- **J. W. TUKEY.** Explorary Data Analysis. Addison-Wesley, 1977
- **NDJIKI-NYA ; HINZ ; STÜBER ; WIEGAND.** A content-based video coding approach for rigid and non-rigid textures. *ICIP'06,* Octobre 2006, 3169-3172
- **VIVEK KWATRA et al.** Graphcut Textures : Image and Video Synthesis Using Graph Cuts. *Proc. ACM Transactions on Graphics, Siggraph'03*